# EUROPEAN PATENT SPECIFICATION

(11) **EP 1 677 009 B1**
(45) Date of publication and mention of the grant of the patent: **23.04.2008**
(21) Application number: 05112538.3
(22) Date of filing: 20.12.2005
(51) Int. Cl.: F15B 15/04, F15B 15/14, F16B 37/04, F16B 7/18

(54) **Trunnion element, in particular for an actuating cylinder**
Zapfenelement, insbesondere für einen Antriebzylinder
Elément de tourillon, en particulier pour un vérin

(30) Priority: 31.12.2004 DE 102004063679
(43) Date of publication of application: 05.07.2006
(73) Proprietor: Bosch Rexroth Teknik AB, 125 81 Stockholm (SE)
(72) Inventor: Granberg, Rune, 12534, Älvsjö (SE)
(74) Representative: Kietzmann, Lutz

(56) References cited:
- EP-A- 0 601 736
- FR-A- 2 425 567
- US-A- 2 979 369

## Description

The invention relates to a trunnion element for an actuating cylinder, with at least one cylindrical section for a rotatable retaining, which is removable mounted to the housing of the actuating cylinder and protrudes perpendicularly to the axis of the actuating cylinder.

According to the present invention a trunnion element is intended to be used for a connection between the housing of an actuator cylinder and an external machine part. The connection features a rotatability, so as to enable the actuator cylinder to fulfil a pivoting movement round the axis of the trunnion element. The design of the trunnion element provides a mounting means to an actuating cylinder, having grooves at the outer side of the cylinder housing. In particular actuating cylinders according to the measurements within the VDMA norms feature grooves at the outer side of the actuator cylinder. The grooves are shaped similar to a dovetail principle, in order to provide the possibility of containing groove stones. The groove stones feature threaded holes or threaded bolts, in order to mount the cylinder to any external machine part. Furthermore the grooves are intended to be used for containing sensor elements, which can be used for position switches or the like.

In general trunnion elements are used in applications, where the actuating cylinder has to fulfil a pivoting movement, where external mechanical elements, connected to the end of the piston rod, forces a non stationary position of the cylinder, for instance by pivoting the whole cylinder within a certain angle.

The patent application EP 0 495 848 B1 discloses a fastening device for actuating cylinders, provided with at least two stringers situated at a maximum of 90° from each other in a circumferential direction. The fastening device includes a fastening yoke, circumferentially surrounding the cylinder tube of the actuating cylinder and having at least two opposing clamping portions. This fastening device is based on a fastening yoke, featuring two halves. These two halves clinch the body of the actuating cylinder, whereby the connection between the fastening element and the body of the actuating cylinder is friction tight by the clamping force, whereby the trunnion element is featured at each half of the yoke.
It is a disadvantage of the disclosed fastening device, that it is a big, space intensive construction, which features several surfaces, which have to be machined in a complex way. A problem occurring in the use of fastening yokes which are clamped circumferentially round the cylinder tube is that it requires a large clamping force. This clamping action against the outside of the cylinder tube causes a deformation of the cross sectional configuration of the cylinder tube. Such a deformation may in turn cause the piston to stick or even get locked in the cylinder tube. The use of clamping blocks avoiding the deformation in the body of the actuating cylinder is complex and further components are necessary and complicate the main construction.

Therewith it is the objective of the present invention, to provide a trunnion element, which features a small and simple construction and consists of less components.

The problem can be solved basing on a trunnion element, according to claim 1 in conjunction to the representative features. Advantageous embodiments of the invention are given in the pending claims.

This object is achieved in the locking unit of claim 1. The invention discloses, that the body of the trunnion element features an end face for a fitting to the housing of the actuating cylinder, whereas the removable mounting is realised by at least one screw means, screwed into at least one groove stone, which is arranged in at least one groove of the housing.

This arrangement of a trunnion element provides a simple construction, because no yokes and clamping blocks are necessary. Due to the wide spreading of cylinder housings with grooves at their outside the possibility of the use of an interconnection by a screwing with groove nuts can be seen as a preferable solution. With this solution the trunnion element is simplified and reduced on only one single part for one trunnion element. The screwing of the trunnion element effects no deformation in the housing and therewith the run of the piston in the housing is not influenced. Because of the extension of the grooves in the outside surface of the actuating cylinder housing the trunnion elements can be mounted at any position along the cylinder, because it is possible to displace the groove stones within the groove, and whereas the body of the cylinder has not to be modified by screw holes or the like. Moreover the mounting and adjustment of the invented trunnion element to the cylinder housing is much easier than the trunnion element, basing on the state of the art.

Advantageously, the end face of the trunnion element features a flange for a fitting to the housing of the actuating cylinder, whereas the flange comprises at least two via holes for at least two corresponding screw elements, which are screwed into the at least one groove stone. A flange increases the stability of the interconnection between the housing of the cylinder and the trunnion element, because at least two screw connections can be realised. Furthermore the flexural strength is increased by the extended surface of the fitting.

It is an advantage of the invention, that the trunnion element features a screw bolt, which is one-piece with the trunnion element, protruding perpendicularly out of the centre of the end face, and which is screwed into a groove stone. In order to provide a trunnion element, which features an one piece construction, the screw bolt is arranged at the mounting face side, whereby the screwing is facilitated by turning the whole trunnion element to tight the screw connection. As an option the trunnion element can feature a socket wrench at the end of the cylindrical section or a wrench size at its outer diameter in order to use a screw wrench for tightening the trunnion element.

According to an advantageous embodiment, that the connection of the trunnion element features a central screw element running along the axis of the trunnion element, which is screwed into a groove stone, whereas the cylindrical section features a countersink in order to receive the bolt head of the central screw within the cylindrical section. As a further version of a screw interconnection a single standard screw is arranged through the trunnion element, whereby different screw threads are applicable with different groove stones without changing the trunnion element. The countersink can be shaped according to the kind of the screw head, whereby e.g. cone head screws or cylinder head screws are applicable.

It is an advantage of the invention, that the end face features a flange section, which has a greater diameter than the cylindrical section, in order to protect the housing against the retaining yoke, wherein the flange section is one-piece designed with the trunnion element or that the end face features a flange section, which has a greater diameter than the cylindrical section, in order to protect the housing against the retaining yoke, wherein the flange section is provided as a flat washer. In case of a pivoting movement of the cylinder housing in use of the cylinder an edge guide is necessary, to avoid a direct contact of the retaining yoke against the housing of the cylinder. Therefore it is an advantage to provide the trunnion element with a flange, e.g. in the form of a washer.

As an advantageous embodiment, the trunnion element is made of steel. With the chose of a steel material as a construction material for the trunnion element the advantages of high holding forces and a low abrasion are given.

According to an advantageous embodiment the groove stone and/ or the end face of the trunnion element is provided with cutting edges, in order to increase transferable forces between the trunnion element and the actuating cylinder. These cutting edges permit a form fitting in the surface of the contact area between the trunnion element and the housing of the actuating cylinder and ensure, that no sliding movement along the cylinder housing can occur.

Advantageously the actuating cylinder has at least two trunnion elements which are arranged at the housing of the actuator cylinder, whereby the mounting positions of each trunnion element are appropriate to each other in opposite directions. This arrangement offers a retaining yoke, in order to provide a close pivoting system, in which the actuating cylinder is turning round a stationary axis.

The foregoing and other aspects will become apparent from the following detailed description of the invention when considered in conjunction with the enclosed drawings.
- Fig. 1a: a shows a trunnion element, which is performed with a flange and an interconnection by 2 screws;
- Fig. 1b: shows the arrangement of two trunnion elements, which are positioned at opposite sides of the housing of an actuating cylinder;
- Fig. 2: shows a trunnion element, whereas the a screw bolt is protruding perpendicularly out of the centre of the end face; and
- Fig. 3: shows a trunnion element, mounted to the housing of a actuating cylinder with a single screw element.

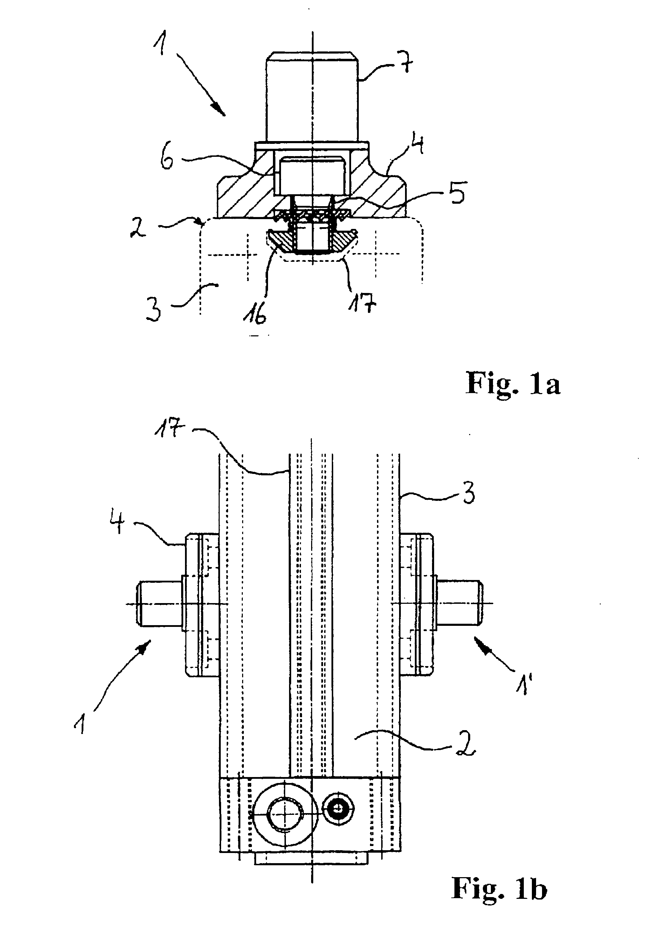

In Fig. 1a is shown a trunnion element 1, which is interconnected to the housing 2 of an actuating cylinder 3. The trunnion element 1 features a flange 4, whereby the flange 4 features two via holes 5 in order to arrange two screws 6 through the flange 4. Next to the flange 4 the trunnion element 1 has a cylindrical section 7, which can be retained by an external retainer, which is not shown in the Figure 1a. The housing 2 features a groove 17, whereas a groove stone 16 is in the longitudinal direction movable arranged in said groove 17.

In Fig. 1b is shown the arrangement of two trunnion elements 1, which are positioned at opposite sides of the housing 2 of the actuating cylinder 3. The axis of the cylindrical section 7 of the two trunnion elements 1 are lying in one axis, in order to provide a retaining arrangement, which offers a close pivoting system, in which the actuating cylinder 3 is turning round a stationary axis, whereby the retaining system can be shaped like a yoke and the actuating cylinder 3 is placed in between the yoke sections.

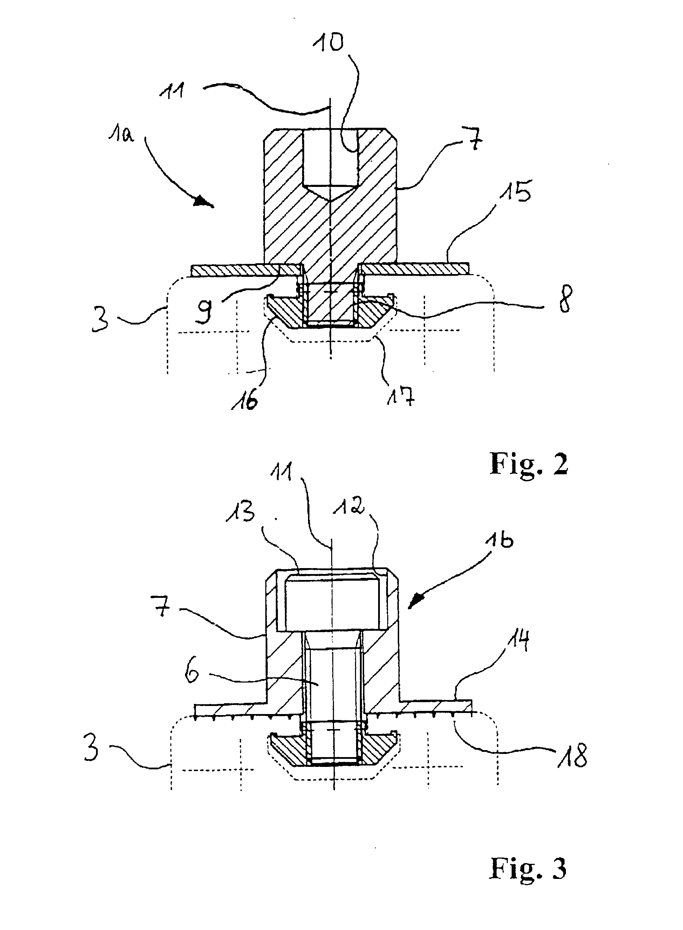

Fig. 2 shows a shows an other embodiment of the trunnion element 1a, whereas a screw bolt 8 is protruding perpendicularly out of the centre of the end face 9. This design of the trunnion element 1a features an one piece construction, the screw bolt 8 is arranged at the mounting end face 9, whereby the trunnion element 1a features a socket wrench 10 at the end face of the cylindrical section 7 in order to use a screw wrench for tightening the trunnion element 1a to the actuating cylinder 3. A flat washer 15 is increasing the contact area between the trunnion element 1a and the actuating cylinder 3.

In Fig. 3 is shown a further embodiment of the trunnion element 1b connected to the actuating cylinder 3. A single screw element 6 is running through the longitudinal axis 11 of the trunnion element 1b. The screw is performed with a cylinder head shape, whereby the bolt head 13 is sunk into a countersink 12. The end face features a flange section 14, which has a greater diameter than the cylindrical section 7, in order to obtain a greater bearing area than with the cylindrical section 7, wherein the flange section 14 is one-piece formed with the trunnion element 16. The end face of the flange 14 shows cutting edges 18, whereby the edges cuts into the surface of the housing 2 of the actuating cylinder 3, whereby the cutting edges can be shaped as spikes or as sharp- edged grooves.

The present invention is not limited by the embodiment described above, which is represented as an example only and can be modified in various ways within the scope of protection defined by the appended patent claims. Thus the invention is also applicable to different locking units.

### Reference Numbers

- **1**: trunnion element
- **2**: housing
- **3**: actuating cylinder
- **4**: flange
- **5**: via hole
- **6**: screw element
- **7**: cylindrical section
- **8**: screw bolt
- **9**: end face
- **10**: socket wrench
- **11**: longitudinal axis
- **12**: countersink
- **13**: bolt heat
- **14**: flange section
- **15**: flat washer
- **16**: groove stone
- **17**: groove
- **18**: cutting edge

## Claims

1. Actuating cylinder **(3)** with a trunnion element **(1)** having, at least one cylindrical section **(7)** for a rotatable retaining and being removably mounted to the housing **(2)** of the actuating cylinder **(3)** and protruding perpendicularly to the axis of the actuating cylinder **(3),**
**characterised in that** the body of the trunnion element **(1)** features an end face **(9)** for a fitting to the housing **(2)** of the actuating cylinder **(3),** whereby the removable mounting is realised by at least one screw means, screwed into at least one groove stone **(16)**, which is arranged in at least one groove **(17)** of the housing **(2).**

2. Actuating cylinder according to claim 1,
**characterised in that** the end face **(9)** of the trunnion element **(1)** features a flange **(4)** for a fitting to the housing **(2)** of the actuating cylinder **(3),** whereby the flange **(4)** comprises at least two via holes **(5)** for at least two corresponding screw elements **(6),** which are screwed into the at least one groove stone **(16).**

3. Actuating cylinder according to claim 1 or 2,
**characterised in that** the trunnion element **(1)** features a screw bolt **(8),** which is one-piece with the trunnion element **(1),** protruding perpendicularly out of the centre of the end face **(9),** and which is screwed into a groove stone **(16).**

4. Actuating cylinder according to claim 1,
**characterised in that** the connection of the trunnion element **(1)** features a central screw element **(6)** running along the axis of the trunnion element **(1),** which is screwed into a groove stone **(16),** whereas the cylindrical section **(7)** features a countersink **(12)** in order to receive the bolt head **(13)** of the central screw element **(6)** within the cylindrical section **(7).**

5. Actuating cylinder according to one of the preceding claims,
**characterised in that** the end face **(9)** features a flange section **(14),** which has a greater diameter than the cylindrical section **(7),** in order to protect the housing **(2)** against the retaining yoke, wherein the flange section **(14)** is one-piece designed with the trunnion element **(1).**

6. Actuating cylinder according to one of the preceding claims,
**characterised in that** the end face **(9)** features a flange section **(14),** which has a greater diameter than the cylindrical section, in order to protect the housing **(2)** against the retaining yoke, wherein the flange section **(14)** is provided as a flat washer **(15).**

7. Actuating cylinder according to one of the preceding claims,
**characterised in that** the trunnion element **(1)** is made of steel.

8. Actuating cylinder according to one of the preceding claims,
**characterised in that** the groove stone **(16)** and/ or the end face **(9)** of the trunnion element **(1)** is provided with cutting edges **(18),** in order to increase transferable forces between the trunnion element **(1)** and the actuating cylinder **(3).**

9. Actuating cylinder according to one of the preceding claims, having at least two trunnion elements (1) which are arranged at the housing **(2)** of the actuator cylinder **(3),** whereby the mounting positions of each trunnion element **(1)** are appropriate to each other in opposite directions.

## Patentansprüche

1. Betätigungszylinder (3) mit einem Lagerzapfenelement (1), das mindestens einen zylindrischen Abschnitt (7) zum drehbaren Halten hat und am Gehäuse (2) des Betätigungszylinders (3) entfernbar angebracht ist und senkrecht zur Achse des Betätigungszylinders (3) vorsteht,
**dadurch gekennzeichnet, dass** der Körper des Lagerzapfenelements (1) eine Stirnfläche (9) für ein Anbauen am Gehäuse (2) des Betätigungszylinders (3) aufweist, wobei das entfernbare Anbringen durch mindestens ein Schraubmittel realisiert ist, das in mindestens einen Nutstein (16) eingeschraubt ist, der in mindestens einer Nut (17) des Gehäuses (2) angeordnet ist.

2. Betätigungszylinder nach Anspruch 1,
**dadurch gekennzeichnet, dass** die Stirnfläche (9) des Lagerzapfenelements (1) einen Flansch (4) für ein Anbauen am Gehäuse (2) des Betätigungszylinders (3) aufweist, wobei der Flansch (4) mindestens zwei Durchlochungen (5) für mindestens zwei entsprechende Schraubenelemente (6) umfasst, die in den mindestens einen Nutstein (16) eingeschraubt sind.

3. Betätigungszylinder nach Anspruch 1 oder 2,
**dadurch gekennzeichnet, dass** das Lagerzapfenelement (1) einen Schraubenbolzen (8) aufweist, der mit dem Lagerzapfenelement (1) ein Stück bildet, der sich aus der Mitte der Stirnfläche (9) heraus erstreckt und der in einen Nutstein (16) eingeschraubt ist.

4. Betätigungszylinder nach Anspruch 1,
**dadurch gekennzeichnet, dass** die Verbindung des Lagerzapfenelements (1) ein mittiges Schraubenelement (6) aufweist, das entlang der Achse des Lagerzapfenelements (1) verläuft und das in einen Nutstein (16) eingeschraubt ist, wobei der zylindrische Abschnitt (7) eine Ansenkung (12) aufweist, um den Schraubenkopf (13) des mittigen Schraubenelements (6) in dem zylindrischen Abschnitt (7) aufzunehmen.

5. Betätigungszylinder nach einem der vorhergehenden Ansprüche,
**dadurch gekennzeichnet, dass** die Stirnfläche (9) einen Flanschabschnitt (14) aufweist, der einen größeren Durchmesser als der zylindrische Abschnitt (7) hat, um das Gehäuse (2) gegen das Haltejoch zu schützen, wobei der Flanschabschnitt (14) mit dem Lagerzapfenelement (1) einstückig ausgebildet ist.

6. Betätigungszylinder nach einem der vorhergehenden Ansprüche,
**dadurch gekennzeichnet, dass** die Stirnfläche (9) einen Flanschabschnitt (14) aufweist, der einen größeren Durchmesser als der zylindrische Abschnitt (7) hat, um das Gehäuse (2) gegen das Haltejoch zu schützen, wobei der Flanschabschnitt (14) als eine flache Scheibe (15) vorgesehen ist.

7. Betätigungszylinder nach einem der vorhergehenden Ansprüche,
**dadurch gekennzeichnet, dass** das Lagerzapfenelement (1) aus Stahl ist.

8. Betätigungszylinder nach einem der vorhergehenden Ansprüche,
**dadurch gekennzeichnet, dass** der Nutstein (16) und/oder die Stirnfläche (9) des Lagerzapfenelements (1) mit Schneidkanten (18) versehen sind, um zwischen dem Lagerzapfenelement (1) und dem Betätigungszylinder (3) übertragbare Kräfte zu vergrößern.

9. Betätigungszylinder nach einem der vorhergehenden Ansprüche, mit mindestens zwei Lagerzapfenelementen (1), die am Gehäuse (2) des Betätigungszylinders (3) angeordnet sind, wodurch die Befestigungspositionen eines jeden Lagerzapfenelements (1) in entgegengesetzten Richtungen einander entsprechend sind.

## Revendications

1. Vérin d'actionnement (3) comprenant un élément de tourillon (1) ayant au moins un tronçon cylindrique (7) pour être maintenu en rotation et qui est monté de façon amovible sur le boîtier (2) du vérin d'actionnement (3) et se projette perpendiculairement à l'axe du vérin d'actionnement (3),
**caractérisé en ce que** le corps de l'élément de tourillon (1) présente une face terminale (9) pour un montage sur le boîtier (2) du vérin d'actionnement (3), et le montage amovible est réalisé par au moins une vis, vissée dans au moins un coulisseau (16) qui est agencé dans au moins une gorge (17) du boîtier (2).

2. Vérin d'actionnement selon la revendication 1,
**caractérisé en ce que** la face terminale (9) de l'élément de tourillon (1) comprend une bride (4) pour un montage sur le boîtier (2) du vérin d'actionnement (3), ladite bride (4) comprenant au moins deux trous traversants (5) pour au moins deux éléments à vis correspondants (6), qui sont vissés dans ledit au moins un coulisseau (16).

3. Vérin d'actionnement selon la revendication 1 ou 2,
**caractérisé en ce que** l'élément de tourillon (1) comprend un boulon à visser (8), qui est d'une seule pièce avec l'élément de tourillon (1), qui se projette perpendiculairement hors du centre de la face terminale (9), et qui est vissé dans un coulisseau (16).

4. Vérin d'actionnement selon la revendication 1,
**caractérisé en ce que** la connexion de l'élément de tourillon (1) comprend un élément à vis central (6) qui s'étend le long de l'axe de l'élément de tourillon (1), qui est vissé dans un coulisseau (16), alors que le tronçon cylindrique (7) présente une contre-dépouille (12) afin de recevoir la tête (13) du boulon de l'élément à vis central (6) dans le tronçon cylindrique (7).

5. Vérin d'actionnement selon l'une des revendications précédentes,
**caractérisé en ce que** la face terminale (9) comprend un tronçon en bride (14) qui présente un diamètre plus important que le tronçon cylindrique (7), afin de protéger le boîtier (22) à l'encontre de l'étrier de retenue, et le tronçon en bride (14) est conçu d'une seule pièce avec l'élément de tourillon (1).

6. Vérin d'actionnement selon l'une des revendications précédentes,
**caractérisé en ce que** la face terminale (9) comprend un tronçon en bride (14), qui a un diamètre plus grand que le tronçon cylindrique, afin de protéger le boîtier (2) à l'encontre de l'étrier de retenue, et le tronçon en bride (14) est réalisé sous forme de rondelle plate (15).

7. Vérin d'actionnement selon l'une des revendications précédentes,
**caractérisé en ce que** l'élément de tourillon (1) est réalisé en acier.

8. Vérin d'actionnement selon l'une des revendications précédentes,
**caractérisé en ce que** le coulisseau (16) et/ou la face terminale (9) de l'élément de tourillon (1) est doté(e) d'arêtes de coupe (18), afin d'augmenter les forces qui peuvent être transférées entre l'élément de tourillon (1) et le vérin d'actionnement (3).

9. Vérin d'actionnement selon l'une des revendications précédentes, comprenant au moins deux éléments de tourillon (1) qui sont agencés sur le boîtier (2) du vérin d'actionnement (3), grâce à quoi les positions de montage de chaque élément de tourillon (1) sont appropriées l'une par rapport à l'autre dans des directions opposées.
